# FASCICULE DE BREVET EUROPEEN

(11) **EP 3 695 068 B1**
(45) Date de publication et mention de la délivrance du brevet: **01.04.2026**
(21) Numéro de dépôt: 18785617.4
(22) Date de dépôt: 12.10.2018
(51) Int. Cl.: E04B 1/84, C03B 37/04, E04B 1/86

(54) **PANNEAU ACOUSTIQUE EN LAINE DE VERRE ET PROCÉDÉ DE FABRICATION D'UN TEL PANNEAU**
SCHALLDÄMMPANEEL AUS GLASWOLLE, UND HERSTELLUNGSVERFAHREN EINES SOLCHEN PANEELS
GLASS WOOL ACOUSTIC PANEL AND METHOD FOR MANUFACTURING SUCH A PANEL

(30) Priorité: 13.10.2017 EP 17196306
(43) Date de publication de la demande: 19.08.2020
(73) Titulaire: SAINT-GOBAIN ISOVER, 92400 Courbevoie (FR); SAINT-GOBAIN PLACO, 92400 Courbevoie (FR)
(72) Inventeur: JACQUS, Gary, 75018 Paris (FR); BERGER, Sylvain, 75018 Paris (FR); LEROY, Pierre, 60370 Saint Félix (FR); NILSSON, Erling, 224 72 Lund (SE); DRAY, Delphine, 93500 Pantin (FR)
(74) Mandataire: Saint-Gobain Recherche
(86) Numéro de dépôt international: PCT/EP2018/077818
(87) Numéro de publication internationale: WO 2019/073019

(56) Documents cités:
- EP-A1- 2 363 325
- WO-A1-2009/112784
- WO-A1-2014/108630
- DE-B3- 10 324 257
- FR-A1- 2 745 597
- FR-A1- 2 993 265
- JP-A- H09 170 276
- US-A1- 2011 031 064
- SATOSHI FUKUTA ET AL: "Sound absorption and form retention of newly developed heat-insulating/acoustic material ; Schallabsorption und Formbest� ndigkeit eines neu entwickelten W� rme- und Schalld� mmmaterials", HOLZ ALS ROHUND WERKSTOFF ; EUROPEAN JOURNAL OF WOOD AND WOOD PRODUCTS, SPRINGER, BERLIN, DE, vol. 70, no. 5, 27 March 2012 (2012-03-27), pages 697 - 704, XP035093926, ISSN: 1436-736X, DOI: 10.1007/S00107-012-0607-X

## Description

L'invention concerne un panneau en laine de verre destiné à être utilisé comme panneau acoustique, par exemple dans un système de plafond suspendu.

Il est connu sur le marché des panneaux acoustiques de plafond permettant de combiner à la fois performance d'absorption et d'isolation. Toutefois, ces panneaux, par exemple en laine de roche ou associant une laine minérale avec une plaque de plâtre, sont généralement très lourds. Ils sont donc difficiles à manipuler pour les installateurs. De plus, du fait de leur poids, des contraintes s'appliquent sur les structures de plafond supportant les panneaux acoustiques. Un panneau acoustique de l'art antérieure est connu par JP H09 170276 A.

Il y a donc un besoin pour des panneaux « légers » permettant d'associer un niveau de performances élevé à la fois en absorption acoustique et en isolation acoustique.

Pour cela, l'invention propose un panneau en laine de verre destiné à être utilisé comme panneau acoustique comme défini dans la revendication 1.

Selon une autre particularité, le panneau présente en outre un micronaire compris entre 2,5/5g et 6/5g, de préférence entre 3/5g et 6/5g, voire entre 3,5/5g et 6/5g, ou encore entre 4/5g et 5/5g.

Selon une autre particularité, le panneau présente en outre une épaisseur supérieure ou égale à 25 mm, voire supérieure ou égale à 30 mm, de préférence supérieure ou égale à 35 mm, voire supérieure ou égale à 40 mm, ou encore supérieure ou égale à 45 mm.

Selon une autre particularité, le panneau comprend en outre, sur chacune de ses faces principales, un voile.

Selon une autre particularité, le voile destiné à être tourné du côté d'où provient le son à amortir ayant une résistance spécifique à l'écoulement d'air inférieure ou égale à 1 kPa.s/m, de préférence inférieure ou égale à 0,5 kPa.s/m, et le voile opposé ayant une résistance spécifique à l'écoulement d'air supérieure ou égale à 1 kPa.s/m, de préférence supérieure ou égal 5 kPa.s/m, voire supérieure ou égale à 10 kPa.s/m, ou encore étanche à l'air.

Selon une autre particularité, le panneau comprend un taux massique de liant compris entre 5% et 15% de la masse totale, de préférence entre 6% et 10% de la masse totale.

Selon une autre particularité, le panneau présente une absorption acoustique α_{W} supérieure ou égale à 0,9.

Selon une autre particularité, le panneau présente une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB.

L'invention concerne également un procédé de fabrication du panneau en laine de verre tel que décrit ci-dessus, comprenant les étapes suivantes :
- fabrication d'un mat de fibres de verre par centrifugation interne, à l'aide d'une installation comportant :
   ∘au moins un centrifugeur apte à tourner autour d'un axe X, notamment vertical, et dont la bande périphérique est percée d'une pluralité d'orifices pour délivrer des filaments d'un matériau fondu,
   ∘ un moyen d'étirage gazeux à haute température sous forme d'un brûleur annulaire qui assure l'étirage des filaments en fibres, et
   ∘ un tapis de réception associé à des moyens d'aspiration pour réceptionner les fibres,
- crêpage du mat de fibres de verre avec un taux de crêpage compris entre 1,5 et 5, de préférence entre 2 et 5, voire entre 2,5 et 5, ou encore entre 3 et 5.

Selon une autre particularité, pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur qui est compris entre 5000 et 40000, de préférence entre 15000 et 35000, et
∘ la vitesse de rotation du centrifugeur à une vitesse supérieure à 2000 tours/minute.

Selon une autre particularité, le diamètre des orifices de chaque centrifugeur est compris entre 0,5 et 1,1 mm.

Selon une autre particularité, chaque centrifugeur présente un diamètre compris entre 200 et 800 mm.

Selon une autre particularité, du liant est projeté sur les fibres de verre avant qu'elles ne tombent sur le tapis de réception, avec un taux compris entre 5% et 15% de la masse totale, de préférence entre 6% et 10% de la masse totale, le mat de fibres de verre étant passé en étuve, de préférence après crêpage, afin de polymériser le liant.

Selon une autre particularité, un voile est collé sur chacune des faces principales du panneau en laine de verre.

Le panneau selon l'invention, avec une densité de 130 kg/m³ au maximum, est dit « léger ». Ses propriétés acoustiques (résistivité à l'écoulement d'air et module d'Young) en font un candidat idéal pour une utilisation comme panneau acoustique. Plus le panneau est léger, plus il est facilement manipulable et moins il applique de contraintes sur la structure qui le supporte.

Parallèlement, le panneau comporte des propriétés acoustiques très intéressantes grâce à une faible résistivité à l'écoulement d'air (comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m²) et à un module d'Young élevé (compris entre 0,5 et 4 MPa, de préférence entre 0,8 et 4 MPa, de façon encore plus préférée entre 1,2 MPa et 4 MPa, voire entre 1,5 MPa et 4 MPa, ou encore entre 2 MPa et 4 MPa). En effet, dans les gammes mentionnées ci-dessus, plus la résistivité à l'écoulement d'air est faible, meilleure est l'absorption acoustique et, plus le module d'Young est élevé, meilleure est l'isolation acoustique.

La mesure de la résistivité à l'écoulement d'air est réalisée selon la norme ISO 9053.

La mesure du module d'Young est réalisée selon la norme ISO 18437 et selon l'article de C. Langlois, R. Panneton et N. Atalla : Polynomial relations for quasi-static mechanical characterization of isotropic poroelastic materials, J. Acoust. Soc. Am., 110:3032-3040, 2001.

Les mesures de la résistivité à l'écoulement d'air et du module d'Young sont réalisées sur le panneau sans les voiles avant/arrière.

Ce panneau en laine de verre est obtenu par fibrage par centrifugation interne puis par crêpage des fibres de verre à un taux de crêpage compris entre 1,5 et 5. Le taux de crêpage qui a une influence sur la résistivité à l'écoulement d'air et sur le module d'Young. Le taux de crêpage est de préférence entre 2 et 5, voire entre 2,5 et 5, ou encore entre 3 et 5 pour diminuer encore la résistivité à l'écoulement d'air et augmenter le module d'Young. En effet, le crêpage favorise l'orientation des fibres selon une direction perpendiculaire Z aux faces principales du panneau : plus le taux de crêpage est élevé, plus l'orientation des fibres selon Z est importante et plus la résistivité à l'écoulement d'air est diminuée et le module d'Young augmenté.

Le panneau en laine de verre présente en outre un micronaire compris entre 2,5/5g et 6/5g. De préférence, le micronaire est compris entre 3/5g et 6/5g, voire entre 3,5/5g et 6/5g, ou encore entre 4/5g et 5/5g. En effet, plus le micronaire augmente, plus la résistivité à l'écoulement d'air diminue.

Le micronaire est représentatif de la finesse des fibres. La mesure du micronaire rend compte de la surface spécifique grâce à la mesure de la perte de charge aérodynamique lorsqu'une quantité donnée de fibres extraites d'un matelas non ensimé est soumise à une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit " appareil micronaire ".

Le panneau en laine de verre présente en outre une épaisseur supérieure ou égale à 25 mm, voire supérieure ou égale à 30 mm, de préférence supérieure ou égale à 35 mm, voire supérieure ou égale à 40 mm, ou encore supérieure ou égale à 45 mm. En effet, plus la densité du panneau diminue, plus il est préférable d'avoir une épaisseur qui augmente pour conserver une densité surfacique satisfaisante. La densité surfacique, ou grammage, est de préférence comprise entre 4 et 6,5 kg/m².

De façon optionnelle, le panneau en laine de verre peut être découpé dans l'épaisseur selon un plan sensiblement parallèle à ses faces principales. Dans cette configuration, l'épaisseur du panneau de laine de verre avant découpe est donc supérieure ou égale à 60 mm, de préférence supérieure ou égale à 70 mm, voire supérieure ou égale à 80 mm.

Toutefois, de préférence, le panneau en laine de verre n'est pas coupé dans l'épaisseur selon un plan sensiblement parallèle à ses faces principales

Le panneau en laine de verre présente en outre un voile sur chacune de ses faces principales. Le voile destiné à être tourné du côté d'où provient le son à amortir, dit voile avant, a une résistance au spécifique à l'écoulement d'air inférieure ou égale à 1 kPa.s/m, de préférence inférieure ou égal 0,5 kPa.s/m, de façon à laisser passer au maximum le son vers la laine de verre, qui va amortir le son pour permettre une bonne absorption acoustique. Le voile opposé, dit voile arrière, a une résistance spécifique à l'écoulement d'air supérieure ou égale à 1 kPa.s/m, de préférence supérieure ou égal 5 kPa.s/m, voire supérieure ou égale à 10 kPa.s/m : il est de préférence étanche à l'air de façon à procurer une bonne isolation acoustique. Un voile étanche a une résistance spécifique à l'écoulement d'air qui est infinie, c'est-à-dire qui est dans les limites de ce qui peut être mesuré. Le voile avant peut être peint pour améliorer l'esthétique du panneau côté face visible. Le voile avant peut être collé sur la face avant du panneau après un léger ponçage permettant d'aplanir celle-ci.

Le panneau en laine de verre comprend en outre un taux massique de liant compris entre 5% et 15% de la masse totale, de préférence entre 6% et 10% de la masse totale.

Le panneau en laine de verre présente une absorption acoustique α_{W} supérieure ou égale à 0,9. L'absorption acoustique est mesurée selon la norme ISO 354. L'indicateur α_{W} est ensuite calculé selon la norme ISO 11654. Dans toute la demande, les mesures ont été réalisées avec un plénum de 200 mm en hauteur de construction.

Le panneau en laine de verre présente une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB. L'isolation acoustique est mesurée selon la norme ISO 10848-1. L'indicateur D_{nfw} est ensuite calculé selon la norme ISO 717-1. Dans toute la demande, les mesures ont été réalisées avec un plénum de 700 mm en hauteur de construction.

Les mesures d'absorption et d'isolation acoustiques sont réalisées sur le panneau avec les voiles avant/arrière.

L'invention concerne également le procédé de fabrication du panneau en laine de verre tel que décrit plus haut. Le procédé comprend une étape de fabrication d'un mat de fibres de verre par centrifugation interne puis une étape de crêpage du mat de fibres de verre avec un taux de crêpage compris entre 1,5 et 5.

L'étape de fabrication du mat de fibres de verre par centrifugation interne est réalisée à l'aide d'une installation comportant :
∘ au moins un centrifugeur apte à tourner autour d'un axe X, notamment vertical, et dont la bande périphérique est percée d'une pluralité d'orifices pour délivrer des filaments d'un matériau fondu,
∘ un moyen d'étirage gazeux à haute température sous forme d'un brûleur annulaire qui assure l'étirage des filaments en fibres, et
∘ un tapis de réception associé à des moyens d'aspiration pour réceptionner les fibres.

Le ou les centrifugeurs, encore appelés assiettes de fibrage, permettent en effet de former des fibres minérales ou d'autres matériaux thermoplastiques, par un procédé de centrifugation interne associée à un étirage par un courant gazeux à haute température. La centrifugation interne s'applique notamment à la production industrielle de laine de verre destinée à entrer par exemple dans la composition de produits d'isolation thermique et/ou acoustique. Un filet de verre fondu est introduit dans chaque centrifugeur tournant à grande vitesse et percé à sa périphérie par un très grand nombre d'orifices par lesquels le verre est projeté sous forme de filaments sous l'effet de la force centrifuge. Ces filaments sont alors soumis à l'action d'un courant annulaire d'étirage à température et vitesse élevées longeant la paroi du centrifugeur, courant qui les amincit et les transforme en fibres. Les fibres formées sont entraînées par ce courant gazeux d'étirage vers un dispositif de réception généralement constitué par une bande perméable aux gaz, nommée tapis de réception.

Pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur qui est compris entre 5000 et 40000, de préférence entre 15000 et 35000, et
∘ la vitesse de rotation du centrifugeur à une vitesse supérieure à 2000 tours/minute.

Ces paramètres permettent en particulier d'ajuster la densité et le micronaire du panneau en laine de verre.

De préférence, le diamètre des orifices de chaque centrifugeur est compris entre 0,5 et 1,1 mm. Chaque centrifugeur présente de préférence un diamètre compris entre 200 et 800 mm.

En outre, du liant est projeté sur les fibres de verre avant qu'elles ne tombent sur le tapis de réception, avec un taux compris entre 5% et 15% de la masse totale, de préférence entre 6% et 10% de la masse totale. Le mat de fibres de verre est ensuite passé en étuve, après le crêpage, afin de polymériser le liant.

Pour finaliser le produit, un voile est collé sur chacune des faces principales du panneau en laine de verre, les spécificités de chacun des voiles ayant été données plus haut.

Un premier exemple selon l'invention est un panneau en laine de verre de densité 117 kg/m³ et d'épaisseur de 50 mm, présentant une résistivité à l'écoulement d'air de 63 kPa.s/m² et un module d'Young de 2,3 MPa. Le micronaire est de 4,3/5g. Le taux de crêpage est de 3,5. Le panneau comporte un voile avant présentant une résistance spécifique à l'écoulement d'air de 0,3 kPa.s/m et un voile arrière étanche. L'absorption acoustique α_{W} est de 0,9 et l'isolation acoustique D_{nfw} est de 42 dB.

Un deuxième exemple selon l'invention est un panneau en laine de verre de densité de 102 kg/m³ et d'épaisseur 52 mm, présentant une résistivité à l'écoulement d'air de 68 kPa.s/m² et un module d'Young de 0,9 MPa. Le micronaire est de 3,6/5g. Le taux de crêpage est de 3,5. Le panneau comporte un voile avant présentant une résistance spécifique à l'écoulement d'air de 0,3 kPa.s/m et un voile arrière étanche. L'absorption acoustique α_{W} est de 0,95 et l'isolation acoustique D_{nfw} est de 41 dB.

Ainsi, des panneaux en laine de verre avec à la fois une bonne absorption acoustique et une bonne isolation acoustique ont pu être fabriqués.

## Revendications

1. Panneau en laine de verre destiné à être utilisé comme panneau acoustique et présentant :
- une densité comprise entre 100 kg/m³ et 130 kg/m³, de préférence comprise entre 100 kg/m³ et 120 kg/m³, voire comprise entre 100 kg/m³ et 110 kg/m³,
- une résistivité à l'écoulement d'air comprise entre 30 et 120 kPa.s/m², de préférence entre 50 et 110 kPa.s/m², voire entre 50 et 100 kPa.s/m², ou encore entre 50 et 90 kPa.s/m², voire entre 50 et 80 kPa.s/m², et
- un module d'Young compris entre 0,5 et 4 MPa, de préférence entre 0,8 et 4 MPa, de façon encore plus préférée entre 1,2 MPa et 4 MPa, voire entre 1,5 MPa et 4 MPa, ou encore entre 2 MPa et 4 MPa.

2. Panneau selon la revendication 1, présentant en outre un micronaire compris entre 2,5/5g et 6/5g, de préférence entre 3/5g et 6/5g, voire entre 3,5/5g et 6/5g, ou encore entre 4/5g et 5/5g.

3. Panneau selon la revendication 1 ou 2, présentant en outre une épaisseur supérieure ou égale à 25 mm, voire supérieure ou égale à 30 mm, de préférence supérieure ou égale à 35 mm, voire supérieure ou égale à 40 mm, ou encore supérieure ou égale à 45 mm.

4. Panneau selon l'une des revendications 1 à 3, comprenant en outre, sur chacune de ses faces principales, un voile.

5. Panneau selon l'une des revendications 1 à 4, dans lequel le voile destiné à être tourné du côté d'où provient le son à amortir ayant une résistance spécifique à l'écoulement d'air inférieure ou égale à 1 kPa.s/m, de préférence inférieure ou égale à 0,5 kPa.s/m, et le voile opposé ayant une résistance spécifique à l'écoulement d'air supérieure ou égale à 1 kPa.s/m, de préférence supérieure ou égal 5 kPa.s/m, voire supérieure ou égale à 10 kPa.s/m, ou encore étanche à l'air.

6. Panneau selon l'une des revendications 1 à 5, comprenant un taux massique de liant compris entre 5% et 15% de la masse totale, de préférence entre 6% et 10% de la masse totale.

7. Panneau selon l'une des revendications 1 à 6, présentant une absorption acoustique α_{W} supérieure ou égale à 0,9.

8. Panneau selon l'une des revendications 1 à 7, présentant une isolation acoustique D_{nfw} supérieure ou égale à 38 dB, de préférence supérieure ou égale à 39 dB, voire supérieure ou égale à 40 dB, ou encore supérieure ou égale à 41 dB, voire supérieure ou égale à 42 dB.

9. Procédé de fabrication du panneau en laine de verre selon l'une des revendications 1 à 8, comprenant les étapes suivantes :
- fabrication d'un mat de fibres de verre par centrifugation interne, à l'aide d'une installation comportant :
∘ au moins un centrifugeur apte à tourner autour d'un axe X, notamment vertical, et dont la bande périphérique est percée d'une pluralité d'orifices pour délivrer des filaments d'un matériau fondu,
∘ un moyen d'étirage gazeux à haute température sous forme d'un brûleur annulaire qui assure l'étirage des filaments en fibres, et
∘ un tapis de réception associé à des moyens d'aspiration pour réceptionner les fibres,
- crêpage du mat de fibres de verre avec un taux de crêpage compris entre 1,5 et 5, de préférence entre 2 et 5, voire entre 2,5 et 5, ou encore entre 3 et 5.

10. Procédé selon la revendication 9, dans lequel, pendant l'étape de fabrication du mat de fibres de verre, une combinaison de paramètres est réglée parmi au moins :
∘ la viscosité du verre fondu, qui est comprise entre 820 et 1500 poise, de préférence entre 950 et 1200 poise,
∘ la pression du brûleur, comprise entre 200 et 1000 mm CE, de préférence entre 200 et 600 mm CE,
∘ la tirée totale de verre par jour et par centrifugeur, qui est comprise entre 14 tonnes/jour et 23 tonnes/jour, de préférence entre 17 et 22 tonnes/jour,
∘ le nombre de trous de chaque centrifugeur qui est compris entre 5000 et 40000, de préférence entre 15000 et 35000, et
∘ la vitesse de rotation du centrifugeur à une vitesse supérieure à 2000 tours/minute.

11. Procédé selon la revendication 9 ou 10, dans lequel que le diamètre des orifices de chaque centrifugeur est compris entre 0,5 et 1,1 mm.

12. Procédé selon l'une des revendications 9 à 11, dans lequel chaque centrifugeur présente un diamètre compris entre 200 et 800 mm.

13. Procédé selon l'une des revendications 9 à 12, dans lequel du liant est projeté sur les fibres de verre avant qu'elles ne tombent sur le tapis de réception, avec un taux compris entre 5% et 15% de la masse totale, de préférence entre 6% et 10% de la masse totale, le mat de fibres de verre étant passé en étuve, de préférence après crêpage, afin de polymériser le liant.

14. Procédé selon l'une des revendications 9 à 13, dans lequel un voile est collé sur chacune des faces principales du panneau en laine de verre.

## Patentansprüche

1. Glaswollplatte, die dafür bestimmt ist, als Akustikplatte verwendet zu werden, und die aufweist:
- eine Dichte, die zwischen 100 kg/m³ und 130 kg/m³, vorzugsweise zwischen 100 kg/m³ und 120 kg/m³, sogar zwischen 100 kg/m³ und 110 kg/m³ liegt,
- einen Luftströmungswiderstand, der zwischen 30 und 120 kPa.s/m², vorzugsweise zwischen 50 und 110 kPa.s/m², sogar zwischen 50 und 100 kPa.s/m² oder weiter zwischen 50 und 90 kPa.s/m², sogar zwischen 50 und 80 kPa.s/m², liegt, und
- einen Elastizitätsmodul, der zwischen 0,5 und 4 MPa, vorzugsweise zwischen 0,8 und 4 MPa, noch mehr bevorzugt zwischen 1,2 MPa und 4 MPa, sogar zwischen 1,5 MPa und 4 MPa, oder weiter zwischen 2 MPa und 4 MPa, liegt.

2. Platte nach Anspruch 1, die ferner einen Mikrongehalt zwischen 2,5/5 g und 6/5 g, vorzugsweise zwischen 3/5 g und 6/5 g, sogar zwischen 3,5/5 g und 6/5 g, oder sogar zwischen 4/5 g und 5/5 g aufweist.

3. Platte nach Anspruch 1 oder 2, die ferner eine Dicke von größer als oder gleich 25 mm oder größer als oder gleich 30 mm, vorzugsweise größer als oder gleich 35 mm oder größer als oder gleich 40 mm, sogar größer als oder gleich 45 mm aufweist.

4. Platte nach einem der Ansprüche 1 oder 3, ferner umfassend, auf jeder ihrer Hauptflächen, einen Schleierstoff.

5. Platte nach einem der Ansprüche 1 bis 4, wobei der Schleierstoff, der dafür bestimmt ist, der Seite zugewandt zu sein, von der der zu dämpfende Schall stammt, einen spezifischen Luftströmungswiderstand von kleiner als oder gleich 1 kPa.s/m, vorzugsweise kleiner als oder gleich 0,5 kPa.s/m, besitzt, und der gegenüberliegende Schleierstoff einen spezifischen Luftströmungswiderstand von größer als oder gleich 1 kPa.s/m, vorzugsweise größer als oder gleich 5 kPa.s/m, sogar größer als oder gleich 10 kPa.s/m, besitzt oder sogar luftdicht ist.

6. **Platte** nach einem der Ansprüche 1 bis 5, umfassend einen Massenanteil an Bindemittel, der zwischen 5 % und 15 % der Gesamtmasse, vorzugsweise zwischen 6 % und 10 % der Gesamtmasse, liegt.

7. Platte nach einem der Ansprüche 1 bis 6, die eine Akustikabsorption α_{W} größer als oder gleich 0,9 aufweist.

8. Platte nach einem der Ansprüche 1 bis 7, die eine akustische Isolierung D_{nfw} aufweist, die größer als oder gleich 38 dB, vorzugsweise größer als oder gleich 39 dB, sogar größer als oder gleich 40 dB oder weiter größer als oder gleich 41 dB, sogar größer als oder gleich 42 dB, ist.

9. Verfahren zum Herstellen der Glaswollplatte nach einem der Ansprüche 1 bis 8, umfassend die folgenden Schritte:
- Herstellen einer Glasfasermatte durch Innenzentrifugation mittels einer Anlage, die beinhaltet:
∘ mindestens eine Zentrifuge, die geeignet ist, sich um eine Achse X, insbesondere vertikal, zu drehen und deren Umfangsstreifen von einer Vielzahl von Öffnungen zum Abgeben von Filamenten eines geschmolzenen Materials durchbrochen ist,
∘ ein gasförmiges Hochtemperaturstreckmittel in Form eines Ringbrenners, der das Strecken der Filamente zu Fasern gewährleistet, und
∘ ein Aufnahmeband, das den Saugmitteln zum Aufnehmen der Fasern zugeordnet ist,
- Kreppen der Glasfasermatte mit einem Kreppanteil, der zwischen 1,5 und 5, vorzugsweise zwischen 2 und 5, sogar zwischen 2,5 und 5 oder weiter zwischen 3 und 5, liegt.

10. Verfahren nach Anspruch 9, wobei während des Schritts des Herstellens der Glasfasermatte eine Kombination von Parametern eingestellt wird aus mindestens:
∘ der Viskosität des geschmolzenen Glases, die zwischen 820 und 1500 Poise, vorzugsweise zwischen 950 und 1200 Poise, liegt,
∘ dem Druck des Brenners, der zwischen 200 und 1000 mm CE, vorzugsweise zwischen 200 und 600 mm CE, liegt,
∘ dem gesamten Glasdurchsatz pro Tag und pro Zentrifuge, der zwischen 14 Tonnen/Tag und 23 Tonnen/Tag, vorzugsweise zwischen 17 und 22 Tonnen/Tag, liegt,
∘ der Anzahl von Löchern jeder Zentrifuge, die zwischen 5000 und 40000, vorzugsweise zwischen 15000 und 35000, liegt, und
∘ der Rotationsgeschwindigkeit der Zentrifuge auf eine Geschwindigkeit von größer als 2000 Umdrehungen/Minute.

11. Verfahren nach Anspruch 9 oder 10, wobei der Durchmesser der Öffnungen jeder Zentrifuge zwischen 0,5 und 1,1 mm liegt.

12. Verfahren nach einem der Ansprüche 9 bis 11, wobei jede Zentrifuge einen Durchmesser aufweist, der zwischen 200 und 800 mm liegt.

13. Verfahren nach einem der Ansprüche 9 bis 12, wobei das Bindemittel auf die Glasfasern gesprüht wird, bevor diese auf das Aufnahmeband fallen, mit einem Anteil, der zwischen 5 % und 15 % der Gesamtmasse, vorzugsweise zwischen 6 % und 10 % der Gesamtmasse, liegt, wobei die Glasfasermatte vorzugsweise nach dem Kreppen durch einen Ofen geführt wird, um das Bindemittel zu polymerisieren.

14. Verfahren nach einem der Ansprüche 9 bis 13, wobei ein Schleierstoff auf jede der Hauptflächen der Glaswollplatte aufgeklebt wird.

## Claims

1. A glass wool panel intended to be used as acoustic panel and having:
- a density comprised between 100 kg/m³ and 130 kg/m³, preferably comprised between 100 kg/m³ and 120 kg/m³, or comprised between 100 kg/m³ and 110 kg/m³,
- an air flow resistivity of between 30 and 120 kPa.s/m², preferably of between 50 and 110 kPa.s/m², or of between 50 and 100 kPa.s/m², or else of between 50 and 90 kPa.s/m², or of between 50 and 80 kPa.s/m², and
- a Young's modulus of between 0.5 and 4 MPa, preferably of between 0.8 and 4 MPa, more preferably still of between 1.2 MPa and 4 MPa, or of between 1.5 MPa and 4 MPa, or else of between 2 MPa and 4 MPa.

2. The panel as claimed in claim 1, additionally having a micronaire of between 2.5/5g and 6/5g, preferably between 3/5g and 6/5g, or between 3.5/5g and 6/5g, or else between 4/5g and 5/5g.

3. The panel as claimed in claim 1 or 2, additionally having a thickness of greater than or equal to 25 mm, or greater than or equal to 30 mm, preferably greater than or equal to 35 mm, or greater than or equal to 40 mm, or else greater than or equal to 45 mm.

4. The panel as claimed in one of claims 1 to 3, additionally comprising a veil on each of its main faces.

5. The panel as claimed in one of claims 1 to 4, wherein the veil intended to be facing the side from where the sound to be absorbed originates having a specific air flow resistance of less than or equal to 1 kPa.s/m, preferably less than or equal to 0.5 kPa.s/m, and the opposite veil having a specific air flow resistance of greater than or equal to 1 kPa.s/m, preferably greater than or equal to 5 kPa.s/m, or greater than or equal to 10 kPa.s/m, or else airtight.

6. The panel as claimed in one of claims 1 to 5, comprising a weight content of binder of between 5% and 15% of the total weight, preferably of between 6% and 10% of the total weight.

7. The panel as claimed in one of claims 1 to 6, having a sound absorption α_{W} of greater than or equal to 0.9.

8. The panel as claimed in one of claims 1 to 7, having a sound insulation D_{nfw} of greater than or equal to 38 dB, preferably greater than or equal to 39 dB, or greater than or equal to 40 dB, or else greater than or equal to 41 dB, or greater than or equal to 42 dB.

9. A process for manufacturing the glass wool panel as claimed in one of claims 1 to 8, comprising the following steps:
- manufacturing a mat of glass fibers by internal centrifugation, using equipment comprising:
∘ at least one centrifuge capable of rotating about an axis X, in particular a vertical axis, and the peripheral band of which is pierced by a plurality of orifices for delivering filaments of a molten material,
∘ a high-temperature gas attenuating means in the form of an annular burner that attenuates the filaments into fibers, and
∘ a receiving belt associated with suction means for receiving the fibers,
- crimping the mat of glass fibers with a degree of crimping of between 1.5 and 5, preferably of between 2 and 5, or of between 2.5 and 5, or else of between 3 and 5.

10. The process as claimed in claim 9, wherein, during the step of manufacturing the mat of glass fibers, a combination of parameters is regulated from among at least:
∘ the viscosity of the molten glass, which is between 820 and 1500 poise, preferably between 950 and 1200 poise,
∘ the pressure of the burner, between 200 and 1000 mm WC, preferably between 200 and 600 mm WC,
∘ the total daily output of glass per centrifuge, which is between 14 metric tons/day and 23 metric tons/day, preferably between 17 and 22 metric tons/day,
∘ the number of holes of each centrifuge, which is between 5000 and 40 000, preferably between 15 000 and 35 000, and
∘ the rotational speed of the centrifuge at a speed greater than 2000 revolutions/minute.

11. The process as claimed in claim 9 or 10, wherein the diameter of the orifices of each centrifuge is between 0.5 and 1.1 mm.

12. The process as claimed in one of claims 9 to 11, wherein each centrifuge has a diameter of between 200 and 800 mm.

13. The process as claimed in one of claims 9 to 12, wherein binder is projected onto the glass fibers before they fall onto the receiving belt, with a content of between 5% and 15% of the total weight, preferably of between 6% and 10% of the total weight, the mat of glass fibers being passed into a drying oven, preferably after crimping, in order to polymerize the binder.

14. The process as claimed in one of claims 9 to 13, wherein a veil is adhesively bonded to each of the main faces of the glass wool panel.
